# FASCICULE DE BREVET EUROPEEN

(11) **EP 0 483 335 B1**
(45) Date de publication et mention de la délivrance du brevet: **19.10.1994**
(21) Numéro de dépôt: 91910123.8
(22) Date de dépôt: 15.05.1991
(51) Int. Cl.: H02B 1/01

(54) **CHASSIS METALLIQUE D'ARMOIRE**
METALLRAHMEN FÜR EINEN SCHRANK
METAL FRAME FOR A CABINET

(30) Priorité: 18.05.1990 FR 9006236
(43) Date de publication de la demande: 06.05.1992
(73) Titulaire: TRANSRACK, 94380 Bonneuil sur Marne (FR)
(72) Inventeur: MASCRIER, Pierre, F-94500 Champigny (FR)
(74) Mandataire: Foldes, Georges
(86) Numéro de dépôt international: FR9100389
(87) Numéro de publication internationale: WO9118436

(56) Documents cités:
- EP-A- 0 144 955
- FR-A- 2 145 107
- FR-A- 2 265 320
- US-A- 4 768 845

## Description

L'invention se rapporte à un châssis métallique d'armoire principalement constitué d'éléments d'un même profilé, elle concerne plus particulièrement un nouveau type d'un tel profilé présentant de multiples avantages et de fabrication relativement simple.

On connaît du document de brevet EP 144 955, un type de châssis métallique réalisé à partir d'un même profilé comprenant une partie centrale à section carrée et deux ailes latérales perpendiculaires entre elles, s'étendant respectivement à partir de deux arêtes opposées de ladite partie centrale. Un tel profilé peut être obtenu par des pliages complexes d'une bande de tôle. Il est d'un prix de revient élevé en raison des difficultés de réalisation et de la quantité de tôle nécessaire.

L'invention propose un autre type de profilé, plus simple à fabriquer, moins coûteux et dont la structure offre un plus grand nombre de possibilités de montage pour les portes et/ou les panneaux fixes ou amovibles.

Dans cet esprit, l'invention concerne donc un châssis métallique d'armoire, notamment pour appareillage électrique ou électronique, au moins en partie constitué par des tronçons d'un même profilé comprenant une première partie à section sensiblement carrée ou rectangulaire et une seconde partie à section en L rattachée à ladite première partie de façon à définir avec elle une gouttière, lesdites deux parties étant définies par pliages parallèles sensiblement à angle droit, d'une même feuille métallique, caractérisé en ce que le bord de l'une des faces de ladite première partie est constitué par un bord longitudinal de ladite feuille métallique, en ce que ce bord vient en regard d'un pliage marquant la limite entre ladite première partie et ladite seconde partie et en ce qu'un espace subsiste entre ce pliage et ledit bord, de façon à définir une fente longitudinale permettant l'insertion de moyens de montage d'un panneau.

Ainsi, la fente permet le montage de panneaux amovibles (munis de simples gâches pivotantes et non de charnières) susceptibles de remplacer des portes lorsque l'armoire est placée dans un endroit exigu ne permettant pas une ouverture aisée d'une telle porte.

Par ailleurs, comme on le verra plus loin, les gouttières se raccordent pour entourer certaines ouvertures de l'armoire et éviter les accumulations d'eau ou d'autres liquides dans la structure. Elles empêchent ainsi que la moindre quantité de liquide ne pénètre dans l'armoire à l'ouverture d'une porte ou au démontage d'un panneau. Ces mêmes gouttières sont conçues pour abriter des blocs de fixation équipés pour recevoir des moyens de fixation de panneaux (généralement inamovibles) de l'armoire aussi bien que des pivots de porte.

Selon une autre caractéristique avantageuse de l'invention, le pliage marquant la limite entre lesdites première et seconde parties définit une gorge longitudinale s'inscrivant le long d'un côté de la paroi correspondante de ladite première partie, de façon à former, à l'extérieur du pliage, un bord arrondi de ladite fente longitudinale. Ainsi, ledit bord arrondi facilite l'éventuel montage d'un panneau amovible en guidant les gâches pivotantes prévues sur ce panneau. De l'autre côté, la gorge participe à l'immobilisation d'un éventuel bloc de fixation, comme cela apparaîtra plus clairement à la lumière de la description qui suit. Le profilé tel que défini ci-dessus peut être facilement obtenu par pliages longitudinaux (au moyen de galets appropriés) d'une feuille d'acier en forme de bande, se présentant avantageusement en bobine. Cette feuille est de préférence électrozinguée sur ses deux faces, ce qui évite toute corrosion interne une fois le profilé réalisé.

L'invention sera mieux comprise et d'autres avantages de celle-ci apparaîtront plus clairement à la lumière de la description qui va suivre d'un châssis métallique d'armoire conforme à son principe, donnée uniquement à titre d'exemple et faite en référence aux dessins annexés dans lesquels:
- la figure 1 est une vue partielle en perspective d'un châssis d'armoire métallique illustrant en outre le montage des panneaux et portes représentés par des arrachements au voisinage d'un bloc de fixation;
- la figure 2 est une vue partielle en perspective éclatée, illustrant le raccordement de trois tronçons dudit profilé;
- la figure 3 est une autre vue partielle en perspective illustrant l'assemblage de trois tronçons à la partie supérieure du châssis et de trois tronçons à la partie inférieure du châssis;
- la figure 4 est une vue de détail en perspective montrant le montage d'un bloc de fixation dans une gouttière;
- la figure 5 est une autre vue de détail selon la coupe V-V de la figure 4; et
- la figure 6 est une autre vue de détail selon la coupe VI-VI de la figure 4.

Sur les dessins, le châssis métallique 11 est principalement constitué d'un assemblage de tronçons d'un même profilé métallique 12. Ces tronçons sont différenciés 12a, 12b, 12c selon leurs emplacements. Ce profilé est obtenu par pliages d'une bande de feuille métallique, ici en acier, électrozinguée sur ses deux faces. Les pliages longitudinaux sont opérés par une machine à galets non représentée, dont la conception est à la portée de l'homme du métier et qui ne fait pas partie de l'invention.

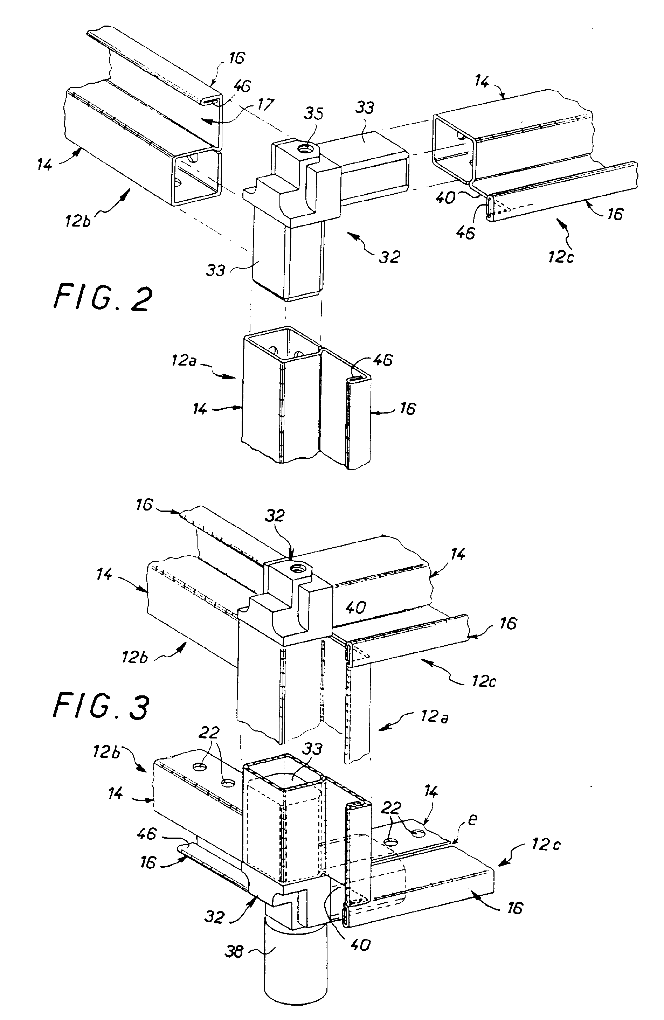

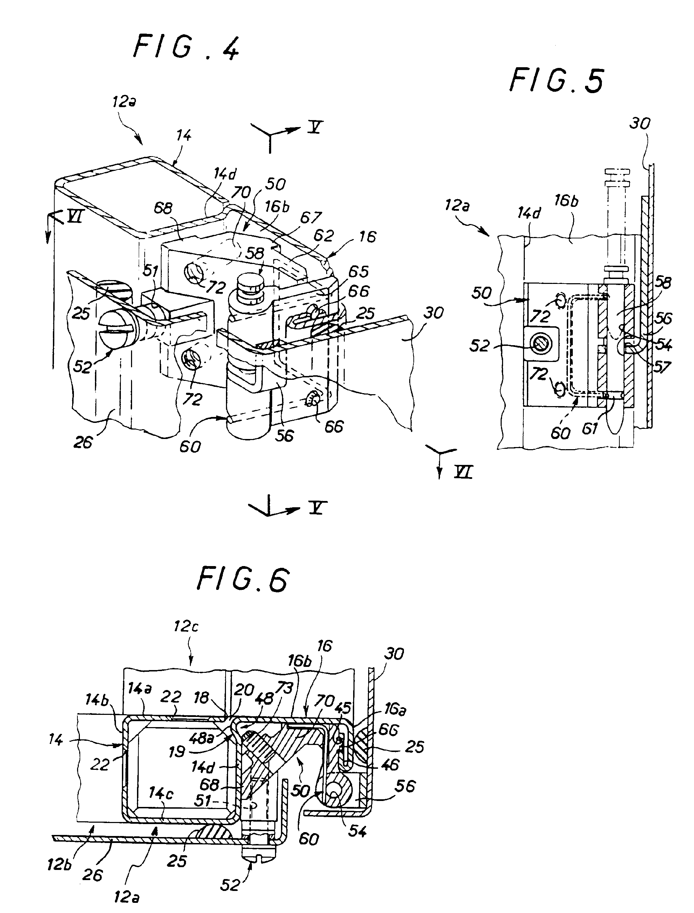

Le résultat de ce formage est un profilé simple comprenant (figures 2 et 6) une première partie 14 à section sensiblement carrée (qui pourrait néanmoins être rectangulaire) et une seconde partie 16 à section en L rattachée latéralement à ladite première partie de façon à définir avec elle une gouttière 17 en U. Les pliages parallèles de la bande d'acier sont sensiblement à angle droit et tels que, comme cela ressort clairement de la figure 6, le bord 18 de l'une des faces de ladite première partie 14 (face repérée 14a sur les dessins) soit constituée par un bord longitudinal de la feuille métallique utilisée et que ce bord 18 vienne en regard d'un pliage 19 marquant la limite entre lesdites première et seconde parties. En outre, un espace de largeur suffisante est maintenu entre l'extérieur de ce pliage 19 et le bord 18 de façon à définir une fente 20 longitudinale, permettant éventuellement le passage de moyens de montage d'un panneau amovible. Un tel panneau, destiné par exemple à remplacer une porte, n'est pas représenté, mais les moyens de montage en question sont classiques et bien connus. Il s'agit par exemple de simples gâches pivotantes montées au voisinage des bords dudit panneau et susceptibles de s'insérer dans des fentes 20 des montants et/ou traverses définissant le cadre de montage de ce panneau.

La face 14a de ladite première partie 14 est une face intérieure, ce qui signifie que le tronçon de profilé est destiné à être monté de façon que la face 14a soit orientée vers l'intérieur de l'armoire. Elle comporte une rangée de trous 22 pour la fixation des équipements. Les trous sont espacés d'une distance prédéterminée normalisée. Une autre face dite intérieure 14b, adjacente à la face 14a comporte également une rangée de trous 22 destinés au même usage. Les deux autres faces 14c, 14d dites extérieures, de ladite première partie 14, ne sont ici percées d'aucun trou. La face 14c constitue une surface d'appui pour un joint d'étanchéité. Sur les figures 4 et 6, un tel joint 25 est porté par un panneau latéral 26. Il peut s'agir d'un joint de type connu, en néoprène associé à un toron métallique pour l'élimination des interférences électromagnétiques.

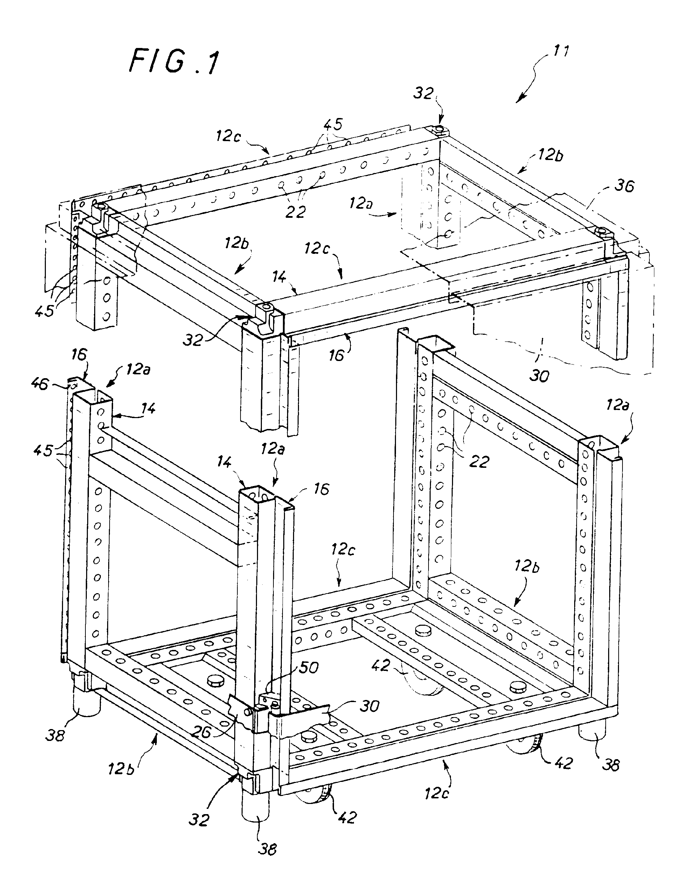

De même, au moins une face de ladite seconde partie 16 constitue une surface d'appui de joint d'étanchéité. Sur les figures 4 à 6, on voit qu'un autre joint 25, de même type que décrit ci-dessus est porté par une porte 30 et s'applique contre la face 16a, la plus étroite de ladite seconde partie 16, définissant en section la petite branche du L. L'autre face, 16b, de ladite seconde partie se raccorde à la face 14d de la première partie par une pliure globalement à 90°, qui sera décrite en détail plus loin. Les faces 14a et 16b, de part et d'autre de la fente 20 sont sensiblement coplanaires. Les tronçons 12 sont découpés aux dimensions voulues pour définir des montants 12a, longerons 12b et traverses 12c (figure 1) qui sont assemblés par soudure à leurs extrémités. On appelle ici "montants" les tronçons verticaux du bâti, "traverses" les tronçons horizontaux matérialisant avec les montants un cadre avant ou arrière et "longerons", les tronçons horizontaux matérialisant avec les montants un cadre latéral. Le montage soudé est facilité et renforcé par l'insertion aux angles du châssis de pièces de raccordement 32, métalliques, massives, comportant deux segments 33 perpendiculaires entre eux, chacun de forme et dimensions correspondant à celles de la partie tubulaire de la section de profilé (c'est-à-dire ladite première partie) dans laquelle il s'engage. Chaque pièce de raccordement 32 comporte en outre un trou taraudé 35 qui peut servir à la fixation du chapeau 36 de l'armoire, pour les quatre pièces de raccordement 32 situées à la partie supérieure, ou au montage de pieds 38 ou d'un socle métallique ou tous autres accessoires de fixation au sol, pour les quatre pièces de raccordement situées à la partie inférieure. Les montants, longerons et traverses sont disposés de la façon suivante. Deux montants 12a et deux traverses 12c haute et basse destinées à former un cadre de porte sont soudées de telle sorte que leurs gouttières 17 se raccordent bout à bout extérieurement et que les faces 16a de ces tronçons forment un cadre rectangulaire sur lequel vient prendre appui le joint de porte. A cet effet, une découpe appropriée 40 (voir figures 2 et 3) est pratiquée à chaque extrémité de chaque traverse, pour obtenir un cadre de porte non échancré aux angles.

Ainsi, du liquide projeté sur l'armoire s'écoule sur les panneaux, les portes ou le chapeau et éventuellement dans les gouttières d'un tel cadre, sans pénétrer à l'intérieur.

Les deux longerons 12b supérieurs sont montés de façon que lesdites gouttières s'ouvrent vers l'extérieur et en haut tandis que les longerons 12b inférieurs sont montés de façon que lesdites gouttières s'ouvrent vers l'extérieur et en bas. Le chapeau 36 comporte des rabats sur tout son périmètre, qui s'étendent dans les gouttières des traverses et recouvrent celles des longerons. Le châssis peut être muni de roues 42 montées sur des longerons spéciaux agencés à sa partie inférieure.

On va maintenant décrire d'autres particularités importantes d'un tronçon de profilé métallique 12. En premier lieu, l'une des faces de ladite seconde partie 16, en l'occurrence la face 16a est munie intérieurement d'une rangée de trous borgnes 45. Ces trous s'ouvrent donc dans la gouttière 17. Ils sont constitués par des trous traversants pratiqués dans une zone marginale 46 de la feuille métallique d'origine. Cette zone marginale est repliée sur elle-même, longitudinalement. Elle forme ainsi l'essentiel de la face 16a de ladite seconde partie 16 qui définit, en sections, la petite branche du L. Ce repliement permet aussi de rendre inaccessible le bord, souvent coupant, de la feuille métallique d'origine.

De plus, le pliage 19 mentionné ci-dessus, marquant la limite entre lesdites première et seconde parties, définit une gorge longitudinale 48 s'inscrivant le long d'un côté de la face correspondante de ladite première partie, c'est-à-dire ici la face 14b, de façon à former, à l'extérieur du pliage, un bord arrondi 48a de ladite fente longitudinale 20. Une première fonction de cette gorge consiste donc, grâce à cet arrondi s'étendant le long de la fente 20, à faciliter l'insertion des moyens de fixation d'un éventuel panneau amovible. Une seconde fonction de la gorge réside dans le fait qu'elle participe, avec les trous borgnes 45, au montage des blocs de fixation 50 qui vont maintenant être décrits. Ces blocs de fixation 50 sont logés dans des gouttières précitées de certains tronçons. Un tel bloc de fixation est représenté sur les figures 4 à 6. Il comporte au moins un trou taraudé 51 apte à recevoir une vis de fixation 52 de panneau. Il comporte aussi de préférence un alésage 54, formant palier (s'étendant perpendiculairement au trou 51) adapté à recevoir un pivot de porte. Dans l'exemple, l'alésage 54 est en deux parties alignées (figure 5) et espacées l'une de l'autre de façon qu'une patte d'articulation 56 solidaire d'une porte 30 voisine soit engagée entre les deux parties pour le pivotement de la porte. La patte 56 comporte un trou 57 qui vient se positionner entre les deux parties de l'alésage. Ce dernier est traversé par un pivot fixe 58 engagé dans les deux parties alignées de l'alésage. Le pivot 58 est immobilisé dans l'alésage 54 par un ressort-tige 60 dont au moins une branche élastique est engagée dans une gorge latérale 61 dudit pivot. Le ressort est immobilisé sous contrainte dans un évidement 62. Cet évidement 62 définit avec la paroi de la gouttière 17, un logement abritant ledit ressort. Celui-ci a ici la forme d'un U dont les deux branches libres sont pliées approximativement à 90° pour venir en appui contre le pivot 58.

De plus, le bloc de fixation 50 comporte une face d'accrochage apte à s'appliquer contre la face 16a de ladite seconde partie 16, intérieurement, cette face d'accrochage étant munie d'au moins un ergot 66 (en l'occurrence, deux dans l'exemple décrit) apte à s'engager dans un trou borgne 45 décrit ci-dessus. Le bloc de fixation comporte en outre deux faces d'appui 67, 68 orientées pour s'appliquer contre les autres faces de la gouttière et une aile oblique 70 au travers de laquelle est pratiqué au moins un trou taraudé 72 recevant une vis 73. Dans l'exemple représenté, le bloc de fixation comporte deux trous taraudés 72 abritant chacun une vis. Ces trous sont positionnés et orientés de façon que les vis puissent s'engager dans la gorge longitudinale 48 décrite ci-dessus afin d'immobiliser le bloc de fixation dans la gouttière 17. En effet, lorsque ledit bloc de fixation est positionné à un endroit voulu dans la gouttière, avec ses ergots 66 engagés dans deux trous borgnes voisins, il suffit de visser les deux vis 73 jusqu'à ce qu'elles pénètrent dans la gorge 48 pour que ledit bloc ne puisse plus s'échapper de la gouttière 17, car tout pivotement du bloc qui permettrait de dégager les ergots des trous borgnes est devenu impossible, comme cela apparaît clairement à la figure 6.

## Revendications

1. Châssis métallique d'armoire, notamment pour appareillage électrique ou électronique, au moins en partie constitué par des tronçons (12) d'un même profilé comprenant une première partie (14) à section sensiblement carrée ou rectangulaire et une seconde partie (16) à section en L rattachée à ladite première partie de façon à définir avec elle une gouttière (17), lesdites deux parties étant définies par pliages parallèles sensiblement à angle droit, d'une même feuille métallique, caractérisé en ce que le bord (18) de l'une des faces de ladite première partie est constitué par un bord longitudinal de ladite feuille métallique, en ce que ce bord vient en regard d'un pliage (19) marquant la limite entre ladite première partie et ladite seconde partie et en ce qu'un espace subsiste entre ce pliage et ledit bord, de façon à définir une fente (20) longitudinale permettant l'insertion de moyens de montage d'un panneau.

2. Châssis métallique selon la revendication 1, caractérisé en ce que, pour un tel tronçon, deux faces adjacentes intérieures (14a, 14b) de ladite première partie comportent chacune une rangée de trous (22).

3. Châssis métallique selon la revendication 1 ou 2, caractérisé en ce que, pour un tel tronçon, au moins une face extérieure (14c) de ladite première partie constitue une surface d'appui pour joint d'étanchéité (25).

4. Châssis métallique selon l'une des revendications 1 à 3, caractérisé en ce que, pour un tel tronçon, au moins une face (16a) de ladite seconde partie (16) constitue une surface d'appui pour joint d'étanchéité (25).

5. Châssis métallique selon l'une des revendications précédentes, caractérisé en ce que l'une des faces de ladite seconde partie est munie intérieurement d'une rangée de trous borgnes (45).

6. Châssis métallique selon la revendication 5, caractérisé en ce que ces trous borgnes sont constitués par des trous traversants pratiqués dans une zone marginale (46) de ladite feuille métallique, cette dernière étant repliée sur elle-même, longitudinalement.

7. Châssis métallique selon l'une des revendications précédentes, caractérisé en ce que ledit pliage (14) marquant la limite entre lesdites première et seconde parties, définit une gorge longitudinale (48) s'inscrivant le long d'un côté de la face correspondante (14d) de ladite première partie, de façon à former, à l'extérieur du pliage, un bord arrondi (48a) de ladite fente longitudinale (20)

8. Châssis métallique selon la revendication 5 ou 6 et la revendication 7, caractérisé en ce qu'il comporte des blocs de fixation (50) logés dans des gouttières (12) précitées de certains tronçons, un bloc de fixation comportant au moins un trou taraudé (51) apte à recevoir une vis de fixation (52) de panneau et/ou un alésage (54) adapté à recevoir un pivot de porte.

9. Châssis métallique selon la revendication 8, caractérisé en ce qu'un tel bloc de fixation comporte une face d'accrochage (65) apte à s'appliquer contre une face de ladite gouttière et munie d'au moins un ergot (66) apte à s'engager dans un trou borgne précité, des faces d'appui (67, 68) orientées pour s'appliquer contre les autres faces de ladite gouttière et une aile oblique (70) au travers de laquelle est pratiqué au moins un trou taraudé (72) recevant une vis (73), ledit trou étant positionné et orienté de façon que ladite vis puisse s'engager dans ladite gorge longitudinale (48), afin d'immobiliser le bloc de fixation dans ladite gouttière.

10. Châssis métallique selon la revendication 9, caractérisé en ce que ledit bloc de fixation comporte un alésage (54) précité, en deux parties alignées et espacées l'une de l'autre, en ce qu'une patte d'articulation (57) solidaire d'une porte adjacente est engagée entre les deux parties dudit palier et comporte un trou (57), ce dernier étant traversé par un pivot (58) précité, fixe, engagé dans les deux parties alignées dudit alésage.

11. Châssis métallique selon la revendication 10, caractérisé en ce que ledit pivot fixe (58) est immobilisé dans ledit alésage par un ressort-tige (60) engagé dans au moins une gorge latérale dudit pivot, ledit ressort étant immobilisé sous contrainte dans un évidement (62) approprié dudit bloc de fixation.

## Patentansprüche

1. Metallisches Schrankgestell, insbesondere für elektrische oder elektronische Geräte, wenigstens zum Teil aus Abschnitten (12) ein und desgleichen Profils bestehend, mit einem ersten Teil (14) von im wesentlichen quadratischem oder rechtwinkligem Querschnitt und einem zweiten Teil (16) von L-Querschnitt, befestigt am ersten Teil derart, daß mit diesem eine Rinne (17) gebildet wird, wobei diese beiden Teile durch parallele Falzungen im wesentlichen unter rechtem Winkel, eines und desgleichen Metallblechs gebildet werden, dadurch gekennzeichnet, dass der Rand (18) einer der Seiten dieses ersten Teils durch einen Längsrand dieses Metallblechs gebildet wird, dass dieser Rand gegenüber einer Falzung (19) kommt, die die Grenze zu diesem ersten Teil und diesem zweiten Teil markiert, und daß ein Raum zwischen dieser Falzung und diesem Rand derart verbleibt, daß ein Längsschlitz (20) gebildet wird, der das Einführen von Montagemitteln für eine Platte gestattet.

2. Metallisches Schrankgestell nach Anspruch 1, dadurch gekennzeichnet, daß für einen solchen Abschnitt zwei benachbarte Innenflächen (14 a, 14 b) dieses ersten Teils je eine Reihe von Löchern (22) umfassen.

3. Metallisches Schrankgestell nach Anspruch 1 oder 2 dadurch gekennzeichnet, daß für einen solchen Abschnitt wenigstens eine Außenfläche (14 c) dieses ersten Teils eine Stützfläche für Dichtungen (25) bildet.

4. Metallisches Schrankgestell nach einem der Ansprüche 1-3, dadurch gekennzeichnet, daß für einen solchen Abschnitt wenigstens eine Fläche (16 a) dieses zweiten Teils (16) eine Stützfläche für Dichtungen (25) bildet.

5. Metallisches Schrankgestell nach einem der vorhergehenden Ansprüche, dadurch gekennzeichnet, daß eine der Flächen dieses zweiten Teils innen mit einer Reihe von Blindlöchern (45) versehen ist.

6. Metallisches Schrankgestell nach Anspruch 5, dadurch gekennzeichnet, daß die Blindlöcher gebildet sind durch Querlöcher, die in einer Randzone (46) dieses Metallblechs ausgespart sind, wobei Letzteres in Längsrichtung auf sich selbst umgefalzt ist.

7. Metallisches Schrankgestell nach einem der vorhergehenden Ansprüche, dadurch gekennzeichnet, daß diese die Grenze zwischen diesen ersten und zweiten Teilen definierende Falzung (14) eine Längsnut (48) definiert, die sich längs einer Seite der entsprechenden Fläche (14 d) dieses ersten Teils einschreibt, derart, daß außerhalb dieser Falzung ein abgerundeter Rand (48 a) dieses Längsschlitzes gebildet wird.

8. Metallisches Schrankgestell nach Anspruch 5 oder 6 und 7, dadurch gekennzeichnet, daß es Befestigungsblöcke (50) umfaßt, die in Rinnen (12) gewisser Abschnitte gelagert sind, wobei ein Befestigungsblock wenigstens eine Gewindebohrung (51), die so ausgebildet ist, daß sie eine Plattenbefestigungsschraube (52) aufnimmt und/oder eine Bohrung (54), umfaßt, die so ausgebildet ist, daß sie einen Trägerzapfen aufnimmt.

9. Metallisches Schrankgestell nach Anspruch 8, dadurch gekennzeichnet, daß ein solcher Befestigungsblock eine Befestigungsfläche (65) umfaßt, die so ausgebildet ist, daß sie sich gegen eine Fläche dieser Rinne legt und mit wenigstens einem Zapfen (66) versehen ist, der so ausgebildet ist, daß er in ein vorgenanntes Blindloch greift, Stützflächen (67, 68), die so orientiert sind, daß sie sich gegen die anderen Flächen dieser Rinne pressen und ein Schrägschenkel (70), quer durch den wenigstens ein eine Schraube aufnehmendes Gewindeloch (72) ausgespart ist, wobei dieses Loch derart positioniert und orientiert ist, daß diese Schraube in diese Längsnut (48) derart eingreifen kann, daß der Befestigungsblock in dieser Rinne unbeweglich gemacht wird.

10. Metallisches Schrankgestell nach Anspruch 9, dadurch gekennzeichnet, daß dieser Befestigungsblock eine genannte Bohrung (54) aus zwei ausgerichteten und unter Abstand zueinander angeordneten Teilen umfaßt, daß eine bezüglich einer benachbarten Tür feste Gelenkpratze (57) zwischen die beiden Teile des Lagers greift und ein Loch (57) umfasst, wobei letzteres von einem genannten festen Zapfen (58) durchsetzt ist, der in die beiden ausgerichteten Teile dieser Bohrung greift.

11. Metallisches Schrankgestell nach Anspruch 10, dadurch gekennzeichnet, daß dieser feste Zapfen (58) durch eine Federstange (60) in dieser Bohrung unbeweglich gemacht ist, die in wenigstens eine seitliche Nut dieses Zapfens greift, wobei diese Feder unter beaufschlagender Beanspruchung in einer geeigneten Ausnehmung (62) dieses Befestigungsblocks festgelegt ist.

## Claims

1. A metal cabinet frame, in particular for electrical or electronic equipment, at least partly formed by portions (12) of the same shaped member comprising a first part (14) of substantially square or rectangular section and a second part (16) of L-shaped cross-section and joined to said first part so as to define with it a channel (17), said two parts being defined by parallel bends substantially at a right angle in the same metal sheet, characterized in that the edge (18) of one of the faces of said first part is formed by a longitudinal edge of said metal sheet, that said edge is disposed facing a bend (19) defining the boundary between said first part and said second part, and that a space is left between said bend and said edge so as to define a longitudinal slot (20) permitting the insertion of means for mounting a panel.

2. A metal frame according to claim 1 characterised in that, for such a portion, two adjacent inside faces (14a, 14b) of said first part each comprise a row of holes (22).

3. A metal frame according to claim 1 or claim 2 characterised in that, for such a portion, at least one outside face (14c) of said first part constitutes a support surface for a seal (25).

4. A metal frame according to one of claims 1 to 3 characterised in that, for such a portion, at least one face (16a) of said second part (16) constitutes a support surface for a seal (25).

5. A metal frame according to one of the preceding claims characterised in that one of the faces of said second part is provided internally with a row of blind holes (45).

6. A metal frame according to claim 5 characterised in that said blind holes are formed by through holes in a marginal zone (46) of said metal sheet, the latter being bent over on to itself longitudinally.

7. A metal frame according to one of the preceding claims characterised in that said bend (14) which defines the boundary between said first and second parts defines a longitudinal groove (48) along one side of the corresponding face (14d) of said first part so as to form outside the bend a rounded edge (48a) of said longitudinal slot (20).

8. A metal frame according to claim 5 or claim 6 and claim 7 characterised in that it comprises fixing blocks (50) housed in said channels (12) of some portions, a fixing block comprising at least one screwthreaded hole (51) for receiving a panel fixing screw (52) and/or a bore (54) adapted to receive a door pivot member.

9. A metal frame according to claim 8 characterised in that such a fixing block comprises a latching face (65) capable of bearing against a face of said channel and provided with at least one lug (66) for engaging into a said blind hole, support faces (67, 68) which are oriented to bear against the other faces of said channel and an inclined wing (70) through which is provided at least one screwthreaded hole (72) receiving a screw (73), said hole being positioned and oriented so that said screw can engage into said longitudinal groove (48) in order to immobilise the fixing block in said channel.

10. A metal frame according to claim 9 characterised in that said fixing block comprises a said bore (54) in two aligned and mutually spaced parts, that a pivot mounting lug portion (57) which is fixed with respect to an adjacent door is engaged between the two parts of said bearing and comprises a hole (57) through which passes a said fixed pivot member (58) which is engaged in the two aligned parts of said bore.

11. A metal frame according to claim 10 characterised in that said fixed pivot member (58) is immobilised in said bore by a spring rod (60) engaged into at least one lateral-groove of said pivot member, said spring being immobilised in a stressed condition in a suitable recess (62) in said fixing block.
